# EUROPEAN PATENT APPLICATION

(11) **EP 1 643 406 A2**
(43) Date of publication of application: **05.04.2006**
(21) Application number: 05108472.1
(22) Date of filing: 15.09.2005
(51) Int. Cl.: G06F 21/00

(54) **Registration identifier reuse**

(30) Priority: 30.09.2004 US 955642
(71) Applicant: MICROSOFT CORPORATION, Redmond, WA 98052 (US)
(72) Inventor: Sekaran, Dhiga D., 98052, Redmond (US); Lo, Aaron, 98052, Redmond (US)
(74) Representative: Grünecker, Kinkeldey, Stockmair & Schwanhäusser Anwaltssozietät

(57) **Abstract**

A facility for generating and using a unique identifier as a key to identify a unique user agent instance among multiple user agents of the same user is provided. The facility generates an identifier for a first user agent instance, which is an instance of a user in an application instance. The facility uses the identifier for a registration of the first user agent instance with a logical server, and associates the identifier with the first user agent instance and the logical server registration pair. The facility then uses the identifier for a subsequent registration of the first user agent instance with the logical server.

## Description

### TECHNICAL FIELD

The described technology is directed generally to communication between devices over a computer network and, more particularly, to persisting an identifier over a lifetime of a user agent instance.

### BACKGROUND

The Session Initiation Protocol (SIP) is a signaling protocol that provides a mechanism for a computing device to locate another device it wants to communicate with over a computer network and to establish a communication session therewith. In particular, SIP is an Internet Engineering Task Force (IETF) standard protocol for initiating interactive user-sessions in a number of scenarios. For example, SIP is used for Internet conferencing, telephony, gaming, virtual reality, event notification, and instant messaging. The SIP protocol enables call setup initiation, routing, authentication and other feature messages to endpoints within an IP domain.

Like HTTP or SMTP, SIP works in the Application Layer of the Open Systems Interconnection (OSI) communications model. As such, SIP can establish multimedia sessions or Internet telephony calls, and modify or terminate them. The SIP protocol can also invite participants to unicast or multicast sessions that do not necessarily involve the initiator. Because the SIP supports name mapping and redirection services, users initiate and receive communications and services from any location and networks are capable of identifying users within the network.

Although SIP has been widely implemented for various applications, the current SIP protocol has a deficiency whereby there is no unique identifier for a device carried in the SIP signal. The standard SIP solution is to use the device's IP address, however, this is not an adequate solution because in many situations the device itself remains the same yet the device's IP address changes, as in the case of a reboot.

Further, using different identifiers across different registration or logon sessions of the same instance of a client with a server causes stale registration/subscription records to be created on the server. For example, using an executing application instance on a client computer, a user may register with a server using an identifier. The identifier used to register with the server appropriately identifies the user's registration session with the server. Subsequently, during the registration session, a glitch in the network may cause the registration session to be lost. Upon detecting the lost registration session, the user again registers with the server but, this time, uses an identifier that is different than the identifier used previously to register with the server. This causes all the records - e.g., registration data and information for the previous registration session between the user and the server - on the server corresponding to the prior registration session to become stale.

Accordingly, an identifier for use in uniquely identifying a user agent instance across multiple registration/login sessions with a server will have significant utility.

### BRIEF DESCRIPTION OF THE DRAWINGS

Figure 1 is a block diagram illustrating selected components typically incorporated in at least some of the computer systems on which the facility executes.

Figure 2 is a schematic diagram illustrating a Session Initiation Protocol (SIP) system in which aspects of embodiments of the facility may be incorporated.

Figure 3 is a schematic diagram illustrating multiple user agent instances registered with a registration server over time, according to some embodiments.

Figure 4 illustrates a flow chart of a method by which an identifier is reused across multiple registration sessions of a user agent instance, according to some embodiments.

Figure 5 illustrates a flow chart of a method by which a server processes a registration of a user agent instance, according to some embodiments.

Figure 6 is a schematic diagram showing an architecture of selected components of a home server suitable for using an epid via SIP to uniquely identify a user agent instance, according to some embodiments.

### DETAILED DESCRIPTION

A software facility ("facility") for creating and using a unique identifier as a key to identify a unique user agent instance among multiple user agents of the same user is described. Each identifier represents its corresponding user agent instance to a specific cluster of registration/login servers. The identifier is kept for the lifetime of the user agent instance, and the identifier is reused across multiple logical registration/login sessions. In some embodiments, the identifier is included in an incoming request message under the Session Initiation Protocol (SIP).

By way of example, an instance of an application program may be executing on a client computer. Using the application instance, a user may request to register/logon to a remote server, which is coupled to the client computer via a network. In response, the facility executing on the client computer creates a unique identifier for the end-point, which is the user agent instance - e.g., the instance of the user that is requesting the registration - within the application instance. Using the created identifier, the facility proceeds to process the registration with the server. Upon successfully registering the user agent instance with the server, the facility associates the identifier with the user agent instance-logical server pair, and persistently stores the identifier. When the user agent instance requests to re-register/re-login to the same server within the same application instance, for example, after logging off or terminating the previous logon/registration, the facility retrieves the stored identifier that associates the user agent instance-logical server pair, and uses this identifier to re-register the user agent instance with the server.

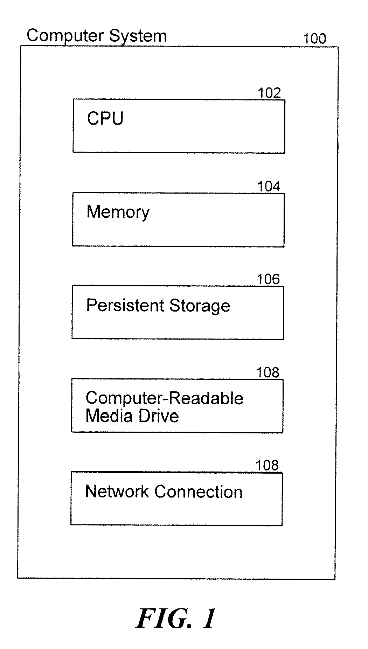

The various embodiments of the facility and its advantages are best understood by referring to Figures 1-6 of the drawings. The elements of the drawings are not necessarily to scale, emphasis instead being placed upon clearly illustrating the principles of the invention. Throughout the drawings, like numerals are used for like and corresponding parts of the various drawings.

Figure 1 is a block diagram illustrating selected components typically incorporated in at least some of the computer systems on which the facility executes. These computer systems 100 may include one or more central processing units ("CPUs") 102 for executing computer programs; a computer memory 104 for storing programs and data-including data structures-while they are being used; a persistent storage device 106, such as a hard drive, for persistently storing programs and data; a computer-readable media drive 108, such as a CD-ROM drive, for reading programs and data stored on a computer-readable medium; and a network connection 110 for connecting the computer system to other computer systems, such as via the Internet, to exchange programs and/or data-including data structures.

The facility may be described in the general context of computer-readable instructions, such as program modules, executed by computer systems 100 or other devices. Generally, program modules include routines, programs, objects, components, data structures, etc. that perform particular tasks or implement particular abstract data types. Memory 104 and persistent storage device 106 are computer-readable media that may contain instructions that implement the facility. It will be appreciated that memory 104 and persistent storage 106 may have various other contents in addition to the instructions that implement the facility.

It will be appreciated that computer systems 100 may include one or more display devices for displaying program output, such as video monitors or LCD panels, and one or more input devices for receiving user input, such as keyboards, microphones, or pointing devices such as a mouse. While computer systems 100 configured as described above are typically used to support the operation of the facility, it will be appreciated that the facility may be implemented using devices of various types and configurations, and having various components.

In the discussion that follows, embodiments of facility are described in conjunction with a variety of illustrative examples. It will be appreciated that the embodiments of facility may be used in circumstances that diverge significantly from these examples in various respects.

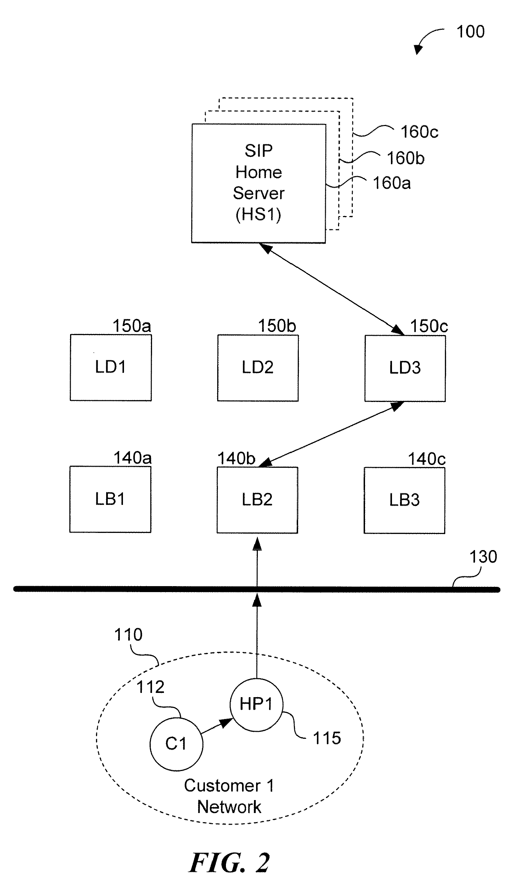

Figure 2 is a schematic diagram illustrating a SIP system in which aspects of embodiments of the facility may be incorporated. In particular, Figure 2 illustrates a mechanism for integrating a unique End Point Identifier, also referred to as the "epid" or "End-point ID," into an incoming request message under the SIP, e.g. to enable an SIP home server 160a-c to uniquely identify a unique user agent instance among multiple user agents of the same user. SIP home server (herein after referred to as "home server'") 160a-c is each an instance of an SIP registrar, which may be a logical registration/login server. The epid is typically carried in the header of the SIP signal, and provides a scheme for uniquely identifying a SIP device. In one embodiment, the epid is as described in U.S. Patent Application No. 10/387,238 entitled End-Point Identifiers in SIP, filed on March 12, 2003, and which is incorporated by reference herein in its entirety. IETF RFC 2543 is also instructive with respect to the Session Initiation Protocol, and is also incorporated by reference herein in its entirety.

By way of example, as illustrated by the topology in Figure 2, in a session initiation operation, a client (C1) 112 (in customer 1's network 110) that registers with an SIP home server 160a-c sends an incoming request message (e.g., SUBSCRIBE message) to SIP home server 160a-c. The incoming request message travels over a computer network comprising a number of components such as load balancers 140a-c and load distributors 150a-c. Note that although the REGISTER and SUBSCRIBE methods are sometimes used as examples herein, the described embodiments apply as well to any other SIP method, including but not limited to NOTIFY, BYE, ACK, CANCEL, INVITE, REFER, MESSAGE, INFO, OPTIONS, PRACK, UPDATE, and PUBLISH.

Load balancers 140a-c are typically IP-level load balancers while load distributors 150a-c are typically application-level entities. Load distributors 150a-c as discussed herein preferably embody a "location service" as described in the SIP protocol specification (RFC 3261). A common deployment is to have client (C1) 112 use an HTTP proxy server (HP1) 115 to make an outbound HTTPS connection to one of the IP based load balancers 140a-c after passing through a firewall 130. As depicted in Figure 2, a connection is made with Load Balancer (LB2) 140b. Load Balancer (LB2) 140b then makes an HTTPS connection to one of the SIP based Load Distributors 150a-c. As depicted in Figure 2, a connection is made between Load Balancer (LB2) 140b and Load Distributor (LD3) 150c. Load Distributor (LD3) 150c subsequently looks up the home server for client (C1) 112, such as via a directory service such as an ACTIVE DIRECTORY®, a product of Microsoft Corp. of Redmond, Washington. Alternatively, Load Distributor (LD3) 150c may use LDAP, an external database, an in-memory database, or some other external data source to acquire this information. Thereafter, Load Distributor (LD3) 150c makes a TCP connection to SIP home server (HS1) 160a and forwards the incoming request message.

In some embodiments, the facility executing on client (C1) 112 creates a unique epid for each end-point of a user on client (C1) 112. The epid is unique across space and time, and may be created using any conventionally available crypto-random number generator or suitable algorithm. The facility creates an epid parameter for an end-point of a user - e.g., a combination of a user agent instance and an application instance - the first time a user agent is initialized, and the epid is persistently stored for subsequent uses by the end-point of the user.

In some embodiments, the end-point of a given user can be uniquely identified by creating a key from an epid and the user's address-of-record (URI). In these embodiments, the epid may not be meaningful by itself; typically, its uniqueness is only assured in combination with a user URI.

To be effective, the epid value is preferably unique for each end-point for a user. Accordingly, the epid parameter can be any encoded string or substantially random value (i.e., either random or generated by a technique such as hashing that typically ensures a low probability of closely spaced repeat values if any) that follows the syntax of a "token." Using a sufficiently random value reduces the likelihood of collisions where two end-points chose the same end-point value. In some embodiments, the epid parameter is an 8 character hex encoded string of an unsigned 32-bit random value. In some embodiments, the epid parameter is a hex encoding of the 48-bit MAC address of the device (e.g., clinet (C1) 112). The persistence and substantial uniqueness of the MAC address ensures that the associated hex encoded string is persistently associated with a particular device and is substantially unique.

The facility generates and uses an epid as a parameter of the SIP header. In some embodiments, the epid is used as a parameter of the SIP From: or To: header. The facility creates/selects/generates an epid and inserts the epid parameter in the From: header of each request it generates, such as the REGISTER request. The SIP specification ensures that the epid parameter is copied to the From: header of the response message for the request. Copying the epid parameter allows the originator's epid parameter to be available in both directions and end-to-end along the signaling path.

An example of this usage of the epid parameter is:
**From: "Bob" <sip:bob@domain.com>;tag=342994;epid=2a56e788**

In this example, the epid parameter is outside the angle brackets. The epid parameter is intended to be a unique identifier for an end-point of the user in the From: or To: URI depending on which header the epid is present in. In some embodiments, the epid parameter is the same across all SIP sessions for this end-point even if the tag parameter is different for each SIP session. Moreover, the epid parameter is treated as an opaque token by the receiving party. Alternatively, the epid parameter is case-insensitive.

The SIP registrar inserts the epid parameter provided in the From: at registration time in the To: header on behalf of the client when routing requests to that client. In general, the originator of a request will not know the epid for the end-point of the destination of the request. The SIP registrar inserts the parameter when it routes the request to the destination allowing downstream proxies to take advantage of this information. In one example, in user-to-user sessions established using the INVITE method, the registrar copies the intended recipient's epid into the TO header, aiding routers along the route in identifying security associations, and in executing other client-specific functions.

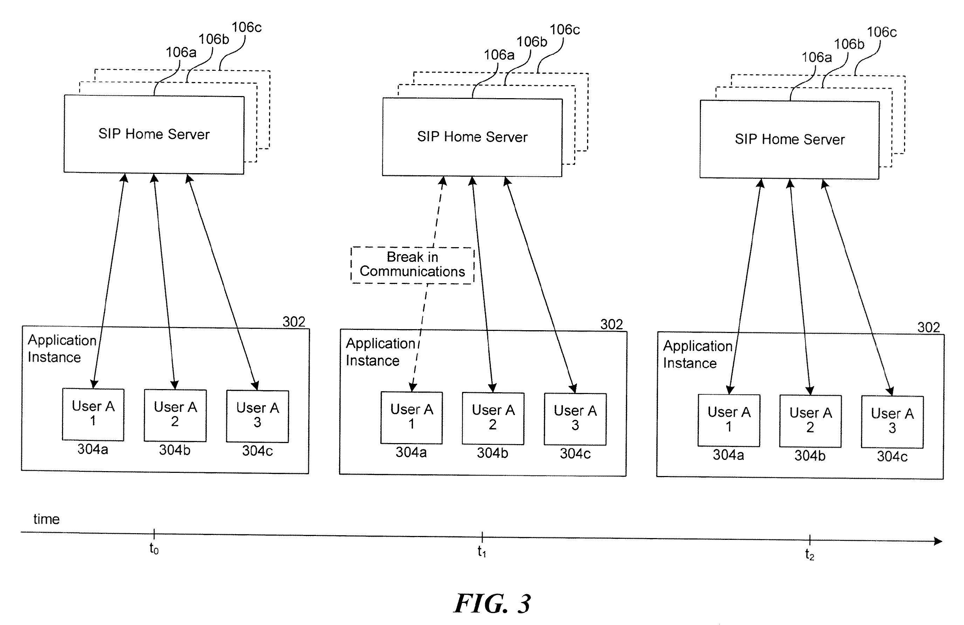

Figure 3 is a schematic diagram illustrating multiple user agent instances registered with a registration server over time, according to some embodiments. As illustrated, an application instance 302 comprises three user agent instances, UserA (1) 304a, UserA (2) 304b, and UserA (3) 304c. Application instance 302 may be executing on client (C1) 112, and user agent instances 304a-c are each user agent instances of the same user, UserA.

At a time t0, each of the user agent instances 304a-c are registered with a SIP home server (HS1) 160a. By way of example, UserA (1) 304a submits a request to register with a logical instance of SIP home server 160a-c. In response, the facility running on client (C1) 112 generates an epid and inserts the epid in the From field of a REGISTER request message to uniquely identify UserA (1) 304a from other instances of the same user. The facility associates the generated epid with the instance of the user, user agent instance 304a, and persistently stores the generated epid for the lifetime of user agent instance 304a. This allows the epid may be reused across multiple logical registration sessions of user agent instance 304a to logical SIP home server 160a-c.

By way of example and as depicted in Figure 2, the incoming request message from client (C1) 112 passes through Proxy server (HP1) 115 via path 205, which routes the incoming request message to one of the load balancing servers 140a-c, in particular, Load Balancer (LB2) 140b. Load Balancer (LB2) 140b then routes the incoming request message to one of the load distributor servers 150a-c, in particular, Load Distributor (LD3) 150c. Load Distributor (LD3) 150c looks up the home server information for client (C1) 112 and proxies the request to client C1's home server (HS1) 160a, which is a logical instance of home server 160a-c.

In some embodiments, Load Distributor (LD3) 150c has Record-Route enabled so that it adds itself to the incoming request message. As such, the route for registration at the IP layer is C1-HP1-LB2-LD3-HS1 whereas at the SIP layer it is C1-LD3-HS1 because the proxy server (HP1) and Load Balancer (LB2) are not SIP servers.

An example of usage of the epid parameter in a REGISTER request message sent from the client (C1) 112 to the Load Distributor (LD3) 150c (of the is:

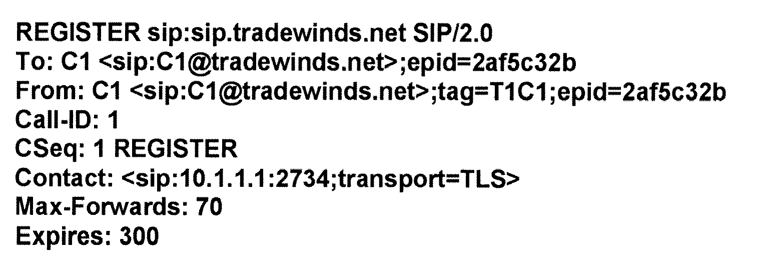

As can be seen from this example, the epid parameter generated and added to the header is 2af5c32b. After the Load Distributor (LD3) 150c receives the incoming request message, with the Record-Route enabled, the Load Distributor (LD3) 150c adds a Record-Route header to the REGISTER request message, and sends the message to home server (HS1) 160a. Home server (HS1) 160a processes the registration and sends a response message to client (C1)112.

As discussed above, the epid allows the logical instance of SIP home server 160a-c, in this instance home server (HS1) 160a to uniquely identify each instance of the user that registers with SIP home server 160a-c. Moreover, SIP home server 160a-c uses the epid to identify records associated with the registered user instance. These records may contain information such as, by way of example, user instance profile information, user instance preference information, user instance customization information, user instance security information, and other information regarding the registered user agent instance.

In a similar manner, the facility generates a unique epid for UserA (2) 304b and UserA (3) 304c, respectively, and uses the generated epids to register these instances of the user with a logical instance of SIP home server 160a-c. The identifiers generated for UserA (2) 304b and UserA (3) 304c are different from each other and the identifier that was generated for UserA (1) 304a above.

At a time t1, there is a break in the communications between UserA (1) 304a and home server (HS1) 160a, causing the registration of UserA (1) 304a with home server (HS1) 160a to be lost. For example, a glitch in the network communication may have caused the break in the communications between UserA (1) 304a and home server (HS1) 160a, as indicated by the dotted or dashed lines in Figure 3.

At a time t2, facility retrieves the stored epid for associated with the UserA (1) 304a-home server (HS1) 160a pair, and registers UserA (1) 304a with a logical instance of SIP home server 160a-c by inserting the in the From field of a REGISTER request, as discussed above. For example, the facility may have been monitoring the network communication links and detected that the communication between UserA (1) 304a and home server (HS1) 160a was restored, e.g., repaired. Upon detecting the restoration of the communication link between UserA (1) 304a and SIP home server 160a-c, the facility retrieves the epid parameter 2af5c32b, and uses the retrieved epid parameter to re-register UserA(1) 304a with SIP home server 160a-c.

In this manner, the facility reuses the identifier, the epid, across multiple logical registration/login sessions of a user agent instance with logical SIP home server 160a-c. The multiple logical registrations of the user agent instance with the server results in at most a single registration of the user agent instance on the server, and the identifier uniquely identifies a user agent instance to logical server registration pair. Further, reusing the epid enables SIP home server 160a-c to perform fast registration processing and helps prevent the records - e.g., registration records - associated with the registered user instance maintained by SIP home server 160a-c from becoming stale. In contrast, if the registration records are allowed to become stale - e.g., the registration records contain obsolete data - the logical server may expire the stale registration records, which may involve costly clean-up operations for the stale records.

Even though the above example illustrated the use of an epid parameter in a SIP protocol to identify a user agent instance, it will be appreciated that the identifier is not limited to being an epid, but may be any identifier suitable for identifying a user agent instance and being conveyed from one node to another node during the registration process. Moreover, it will also be appreciated that the registration protocol is not limited to SIP, but may be any communication protocol suitable for registering a node with another node, and transporting the identifier.

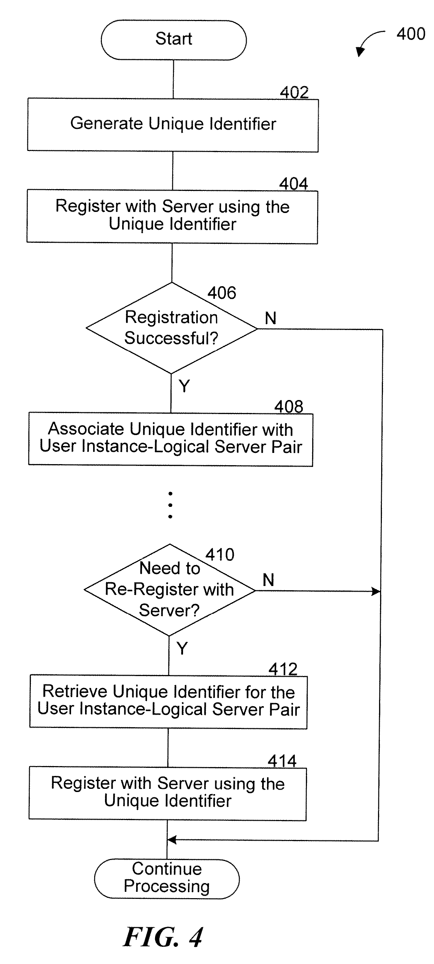

Figure 4 illustrates a flow chart of a method 400 by which an identifier is reused across multiple registration sessions of a user agent instance, according to some embodiments. By way of example, an application program instance is running on client (C1) 112, and a user uses the application instance to initiate a registration with a server. Beginning at a start step, the facility running on client (C1) 112 receives the user's request to register with the server, and generates a unique identifier at step 402. In particular, the facility uses the unique identifier to identify the user agent instance corresponding to the instance of the user using the application instance to request the registration with the server.

At step 404, the facility registers the user agent instance with a logical instance of the server using the unique identifier. For example, the facility may include the unique identifier in a request to register message sent to the server. At step 406, the facility determines whether the registration with the server was successful.

If the registration with the server was successful, then, at step 408, the facility associates the unique identifier with the user agent instance-logical server pair, and persistently stores the unique identifier. The logical server is an instance of the server with which the user requested registration. The facility may notify the user agent instance of the successful registration. Alternatively, if the registration with the server was unsuccessful, then the facility may notify the user agent instance of the unsuccessful registration and continues processing.

Subsequently, at step 410, the facility determines whether there is a need to re-register the same user agent instance with the same server. For example, having de-registered (e.g., logged off) with the server, the user agent instance may have requested to re-register. If the facility determines that there is a need to re-register the user agent instance with the server, then, at step 412, the facility retrieves the stored unique identifier for the user agent instance-logical server pair. At step 414, the facility uses the retrieved unique identifier to re-register the same user agent instance with the server. By re-using the same identifier to re-register the user agent instance with the server, the facility identifies and maintains the persistence of the user agent instance to logical server registration pair. Having re-registered the user agent instance with the server, or subsequent to determining that there is not a need to re-register the user agent instance with the same server at step 410, the facility continues processing.

Those of ordinary skill in the art will appreciate that, for this and other processes and methods disclosed herein, the functions performed in the processes and methods may be implemented in differing order. Furthermore, the outlined steps are only exemplary, and some of the steps may be optional, combined with fewer steps, or expanded into additional steps without detracting from the essence of the invention.

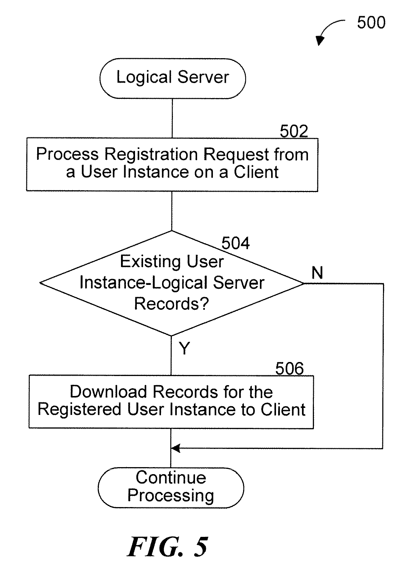

Figure 5 illustrates a flow chart of a method 500 by which a server processes a registration of a user agent instance, according to some embodiments. Continuing the above example, a logical server receives the registration request message, which includes the unique identifier, from client (C1) 112. At step 502, the logical server processes the registration of the user agent instance on client (C1) 112. At step 504, the logical server checks to determine whether records exist for this user agent instance-logical server registration pair.

For example, the same user agent instance may have previously registered with the logical server, and the logical server may have created records to store information regarding the prior registration. For example, the logical server may have stored user agent instance preference information, customization information, etc. in the records, and identified the records as being associated with the user agent instance-logical server registration pair, for example, using the identifier received as part of the registration request message from the user agent instance. For the current registration of the user agent instance, the logical server can use the received identifier to determine whether there are existing records for this user agent instance from a previous registration of the same user agent instance.

If records from a previous registration of the user agent instance exist, then at step 506, the logical server downloads the information/data in the records to the user agent instance. For example, the logical server may download the information/data to client (C1) 112 on which the user agent instance resides. Subsequent to downloading the information/data (step 506) or determining that records from a previous registration of the user agent instance does not exist, the logical server continues processing.

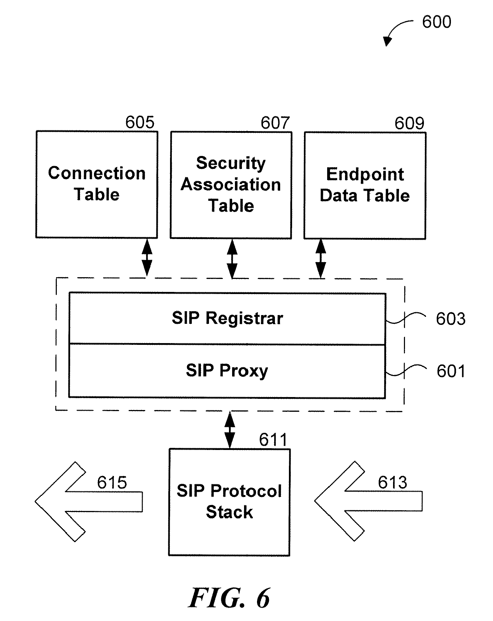

Figure 6 is a schematic diagram showing an architecture 600 of selected components of a home server suitable for using an epid via SIP to uniquely identify a user agent instance, according to some embodiments. As illustrated, architecture 600 is composed of a number of components. One primary component of architecture 600 is a SIP Proxy 601. SIP Proxy 601 uses an epid parameter to identify a security association between a device end-point and the proxy. This security association may be used to sign outgoing messages and to verify the signature of incoming messages when appropriate.

Above proxy layer 601 is an application, a registrar 603, which also makes use of the epid parameter. Since the epid parameter uniquely identifies an end-point for a given user, registrar 603 examines this parameter to easily determine whether or not a given request comes from an end-point it has previously seen. This allows registrar 603 to provide fast sign on sequence of an end-point and avoids the expiry of records - e.g., previously created records becoming stale - on the home server. For example, if the request is allowed, registrar 603 can use the epid to identify logon and other records - e.g., user preference information, user customization data, etc. - for the end-point and feed down the information to the end-point. If these records are present, registrar 603 does not have to create new records on the server, which in turn avoids the expiry of the records. Moreover, registrar 603 may use the epid to make policy decisions regarding whether to allow the request or not. Further, registrar 603 may use the epid to determine the proper signaling path (connection) that it should use for forwarding requests destined to a given user. This is particularly valuable in a situation where the connection may be changing rapidly due to unreliable network conditions or otherwise. Thus, the epid information is important for connection management in environments that make use of NATs, firewalls, and DHCP.

Proxy 601 and/or registrar 603 may maintain a set of tables to aid in connection management. In particular, in some embodiments, the tables include a connection table 605, a security association table 607, and an endpoint data table 609. Each table is indexed by user URI and epid. These tables allow proxy 601 and registrar 603 to modify their operation to account for plurality, capability, and presence of the devices associated with each user. Finally, at the lowest level, proxy 601 and registrar 603 interface with an SIP protocol stack 611 which provides for receipt of incoming messages 613 and transmission of outgoing messages 615.

From the foregoing, it will be appreciated that embodiments of the invention have been described herein for purposes of illustration, but that various modifications may be made without deviating from the spirit and scope of the invention. Accordingly, the invention is not limited except in accordance with elements explicitly recited in the appended claims.

## Claims

1. A method in a computing system for identifying a persistence of a user agent instance to logical server registration pair, the method comprising:
generating a first identifier for a first user agent instance;
using the identifier for a registration of the first user agent instance with a logical server;
associating the identifier with the first user agent instance to the logical server registration session; and
using the identifier for a subsequent registration of the first user agent instance with the logical server, wherein the registration and subsequent registration is of the first user agent instance within an application instance, and the identifier uniquely identifies the registration and subsequent registration of the first user agent instance with the logical server.

2. The method of claim 1, wherein the identifier is an endpoint identifier of a Session Initiation Protocol.

3. The method of claim 1, wherein the identifier comprises a user information of a user associated with the first user agent instance.

4. The method of claim 1, wherein the identifier is kept for the lifetime of the user agent instance.

5. The method of claim 1, wherein the identifier is generated by a crypto-random number generator.

6. The method of claim 1, wherein the identifier comprises an indication of a user's URI, wherein the user is associated with the first user agent instance.

7. The method of claim 1 further comprising:
generating a second identifier for a second user agent instance, the second user agent instance and the first user agent instance being an instance of a same user;
using the second identifier for a registration of the second user agent instance with the logical server; and
associating the second identifier with the second user agent instance to the logical server registration session, wherein the second identifier uniquely identifies the second user agent instance to the logical server registration session.

8. The method of claim 7, wherein the second identifier is reused across multiple logical registration sessions of the second user agent instance with the logical server.

9. A computer-readable storage medium whose contents cause a computer to:
generate an identifier for a first user agent instance of a user;
register the first user agent instance with a server using the identifier;
associate the identifier with the first user agent instance to the server registration session; and
re-register the first user agent instance with the server using the identifier, wherein the registration and the re-registration is of the first user agent instance within an application instance, the identifier uniquely identifies both the registration and re-registration of the first user agent instance with the server.

10. The computer-readable storage medium of claim 9 further comprising content that cause a computer to:
generate a second identifier for a second user agent instance of the user within the application instance, the second identifier being different than the identifier;
register the second user agent instance with the server using the second identifier; and
associate the second identifier with the second user agent instance to the server registration session.

11. The computer-readable storage medium of claim 10, wherein the second identifier is reused across multiple logical registration sessions of the second user agent instance with the server.

12. The computer-readable storage medium of claim 9, wherein the first user agent instance is an instance among a plurality of user agent instances of the same user.

13. The computer-readable storage medium of claim 9, wherein the identifier is used to create a key to uniquely identify the first user agent instance.

14. The computer-readable storage medium of claim 13, wherein the key is created from the identifier and the user's URI.

15. One or more computer memories collectively comprising an identifier that uniquely identifies a first user agent instance with a logical server registration session pair, the first user agent instance being an instance of a user within an application instance, such that the identifier is maintained for the lifetime of the user agent instance and reused across multiple logical registration sessions of the first user agent instance with the logical server.

16. The computer memories of claim 15, wherein the identifier is included in a communication to the logical server.

17. The computer memories of claim 15, wherein the identifier is stored on the logical server.

18. The computer memories of claim 15, wherein the identifier comprises information associated with the user.

19. The computer memories of claim 15, wherein the identifier is generated by a random number generator.

20. The computer memories of claim 15, wherein the identifier comprises an indication of the user's URI.

21. The computer memories of claim 15 further comprising a second identifier that uniquely identifies a second user agent instance with the logical server registration session pair, the second user agent instance being an instance of the same user within the application instance.

22. A system for identifying a persistence of a user agent instance to logical server registration pair, the system comprising:
a means for generating an identifier for a first user agent instance, the first user agent instance being an instance of a user;
a means for registering the first user agent instance with a logical server; and
a means for associating the identifier with the first user agent instance to the logical server registration session;
such that the identifier is reused across multiple logical registration sessions of the first user agent instance with the logical server registration sessions, and the identifier uniquely identifies the first user agent instance to the logical server registration session.
